(19) **Europäisches Patentamt European Patent Office Office européen des brevets**

(11) **EP 4 672 736 A1**

(12) **EUROPEAN PATENT APPLICATION**
published in accordance with Art. 153(4) EPC

(43) Date of publication:
**31.12.2025 Bulletin 2026/01**

(51) International Patent Classification (IPC):
**H04N 9/31** (2006.01)

(21) Application number: **24853346.5**

(22) Date of filing: **12.06.2024**

(86) International application number:
**PCT/CN2024/098660**

(87) International publication number:
**WO 2025/035931 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311012449**

(71) Applicant: **Tencent Technology (Shenzhen) Company Limited**
**Shenzhen, Guangdong 518057 (CN)**

(72) Inventors:
• **ZHU, Sikan**
  **Shenzhen, Guangdong 518057 (CN)**
• **WU, Yu**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PICTURE PROJECTION METHOD AND APPARATUS, DEVICE, STORAGE MEDIUM AND PROGRAM PRODUCT**

(57)     Embodiments of this application disclose a picture projection method and apparatus, a device, a storage medium, and a program product, and relate to the field of image processing. The method is performed by a vehicle simulator, the vehicle simulator includes an image generator and a projection device, and the method includes: performing scene rendering by using the image generator based on scene data, to obtain a first scene picture, the scene data indicating a second virtual scene falling within a field of view when a first virtual scene is observed from a first virtual viewpoint, and the first scene picture being located in an image space (301); mapping the first scene picture to a to-be-projected picture by using the image generator based on a first mapping relationship between the first virtual viewpoint and the image space, the to-be-projected picture being located in the image space (302); and performing projection display by using the projection device based on a pixel value corresponding to each coordinate point in the to-be-projected picture, to obtain a projection picture (303). By employing the solutions provided in this application, an accuracy requirement of picture projection can be met.

```
Perform scene rendering by using an image generator based on scene data, to obtain a      ⌐ 301
first scene picture, the scene data indicating a second virtual scene falling within a field
of view when a first virtual scene is observed from a first virtual viewpoint

                                    ↓

Map the first scene picture to a to-be-projected picture by using the image generator        ⌐ 302
based on a first mapping relationship between the first virtual viewpoint and an image
space, the to-be-projected picture being located in the image space

                                    ↓

Perform projection display by using a projection device based on a pixel value                ⌐ 303
corresponding to each coordinate point in the to-be-projected picture, to obtain a
projection picture
```

**FIG. 3**

EP 4 672 736 A1

**Description**

RELATED APPLICATION

This application claims priority to Chinese Patent Application No. 202311012449.5, filed on August 11, 2023 and entitled "PICTURE PROJECTION METHOD AND APPARATUS, DEVICE, AND STORAGE MEDIUM", which is incorporated herein by reference in its entirety.

FIELD OF THE TECHNOLOGY

Embodiments of this application relate to the field of image processing, and in particular, to a picture projection method and apparatus, a device, a storage medium, and a program product.

BACKGROUND OF THE DISCLOSURE

In a picture projection process, a computer device needs to first generate an image and then perform projection display on the image. However, to ensure that a screen display picture observed by human eyes in a physical space remains consistent with an actual image picture generated by the computer device, a projection picture usually needs to be corrected.

In related art, in an initial projection process, the projection picture is shot by using a plurality of cameras. The shot picture is then compared with the image picture, and the projection picture is corrected according to a comparison result, resulting in a complex projection correction process and relatively low correction accuracy.

SUMMARY

Embodiments of this application provide a picture projection method and apparatus, a device, a storage medium, and a program product, which can meet requirements on efficiency and accuracy of picture projection. Technical solutions are as follows:

In an aspect, an embodiment of this application provides a picture projection method, the method being performed by a vehicle simulator, the vehicle simulator including an image generator and a projection device, and the method including:

performing scene rendering by using the image generator based on scene data, to obtain a first scene picture, the scene data indicating a second virtual scene obtained by observing a first virtual scene from a first virtual viewpoint;

mapping the first scene picture to a to-be-projected picture by using the image generator according to a first mapping relationship between the first virtual viewpoint and an image space, the to-be-projected picture being located in the image space; and

performing projection display by using the projection device based on a pixel value corresponding to each coordinate point in the to-be-projected picture, to obtain a projection picture.

In another aspect, an embodiment of this application provides a picture projection apparatus, the apparatus being configured in a vehicle simulator, the vehicle simulator including an image generator and a projection device, and the apparatus including:

a rendering module, configured to perform scene rendering based on scene data by using the image generator, to obtain a first scene picture, the scene data indicating a second virtual scene obtained by observing a first virtual scene from a first virtual viewpoint;

a first pixel determining module, configured to map the first scene picture to a to-be-projected picture according to a first mapping relationship between the first virtual viewpoint and an image space by using the image generator, the to-be-projected picture being located in the image space; and

a first picture projection module, configured to perform projection display based on a pixel value corresponding to each coordinate point in the to-be-projected picture by using the projection device, to obtain a projection picture.

In another aspect, an embodiment of this application provides a computer device, where the computer device includes a processor and a memory; and the memory has at least one instruction stored therein, and the at least one instruction is executed by the processor to implement the picture projection method described in the above aspects.

In another aspect, an embodiment of this application provides a computer-readable storage medium, where the computer-readable storage medium has at least one instruction stored therein, and the at least one instruction is loaded and executed by a processor to implement the picture projection method described in the above aspects.

In another aspect, an embodiment of this application provides a computer program product, where the computer program product includes computer instructions, and the computer instructions are stored in a computer-readable storage medium. A processor of a computer device reads the computer instructions from the computer-readable storage medium, and the processor executes the computer instructions, enabling the computer device to perform the picture projection method provided in various alternative implementations in the above aspects.

In this embodiment of this application, after the first scene picture is obtained by performing the scene rendering through the image generator, the first scene picture is not directly projected. Instead, the to-be-projected picture is determined according to the first mapping relationship between the first virtual viewpoint and the image space. The projection display is performed by using the projection device according to the pixel value corresponding to each coordinate point of the to-be-projected picture, to obtain the projection picture. The projection picture obtained through the foregoing process is consistent with a picture obtained by observing the first virtual scene from the first virtual viewpoint.

In this application, by simulating the scene in which the projection picture is actually viewed by a user, the first virtual viewpoint is set in the first virtual scene, and image correction is performed according to the first mapping relationship between the first virtual viewpoint and the image space, whereby the accuracy of a picture observed by the user located at a user viewpoint (a real viewpoint) is improved. Compared with a correction method in the related art, no camera needs to be used for shooting. The correction method in this application is relatively simple and highly automated.

BRIEF DESCRIPTION OF THE DRAWINGS

FIG. 1 is a structural diagram of a picture projection system according to an embodiment of this application.

FIG. 2 is a schematic diagram of an application of a picture projection method in an automobile simulator and a flight simulator according to an embodiment of this application.

FIG. 3 is a flowchart of a picture projection method according to an exemplary embodiment of this application.

FIG. 4 is a flowchart of a picture projection method according to another exemplary embodiment of this application.

FIG. 5 is a schematic diagram of alignment between first mark points and second mark points according to an exemplary embodiment of this application.

FIG. 6 is a schematic flowchart of mapping relationship determination and picture projection according to an exemplary embodiment of this application.

FIG. 7 is a schematic diagram of a picture in a projection stage according to an exemplary embodiment of this application.

FIG. 8 is a structural block diagram of a picture projection apparatus according to an exemplary embodiment of this application.

FIG. 9 is a schematic structural diagram of a computer device according to an exemplary embodiment of this application.

DESCRIPTION OF EMBODIMENTS

First, terms involved in embodiments of this application are briefly introduced.

Artificial intelligence (AI) involves a theory, a method, a technology, or an application system that uses a digital computer or a machine controlled by the digital computer to simulate, extend, and expand human intelligence, perceive an environment, obtain knowledge, and use knowledge to obtain an optimal result. In other words, the artificial intelligence is a comprehensive technology in computer science and attempts to understand the essence of intelligence and produce a new intelligent machine that can react in a manner similar to human intelligence. The artificial intelligence is to study the design principles and implementation methods of various intelligent machines, to enable the machines to have the functions of perception, reasoning, and decision-making.

An artificial intelligence technology is a comprehensive discipline, and relates to a wide range of fields including both hardware-level technologies and software-level technologies. The basic artificial intelligence technologies generally include technologies such as a sensor, a dedicated AI chip, cloud computing, distributed storage, a big data processing technology, an operating/interaction system, and electromechanical integration. Artificial intelligence software technologies mainly include several major directions such as a computer vision (CV) technology, a speech processing technology, a natural language processing technology, and machine learning/deep learning.

A computer vision (CV) technology is a science that studies how to use a machine to "see", and furthermore, that uses a camera and a computer to replace human eyes to perform machine vision such as recognition and measurement on a target, and further perform graphic processing, causing the computer to process the target into an image more suitable for human eyes to observe, or an image transmitted to an instrument for detection. As a scientific discipline, the computer vision studies related theories and technologies and attempts to establish an artificial intelligence system that can obtain information from images or multidimensional data. The computer vision technologies generally include technologies such as image processing, image recognition, image semantic understanding, image retrieval, optical character recognition (OCR), video processing, video semantic understanding, video content/behavioral recognition, three-dimensional object reconstruction, a three-dimensional (3D) technology, virtual reality, augmented reality, simultaneous positioning, and map construction, and further include common biometric recognition technologies such as face recognition, fingerprint recognition, and iris recognition.

With the research and progress of the AI technology, it has been researched and applied to multiple fields, such as common smart homes, smart wearable devices, virtual assistants, smart speakers, intelligent marketing, unmanned driving, autonomous driving, drones, robots, smart healthcare, and intelligent customer service. It is believed that with the development of the technology, the AI technology will be applied to more fields, and play an increasingly important role.

A viewpoint is an observation position in a three-dimensional space, and is usually represented by a three-dimensional coordinate point.

A first virtual viewpoint is an observation position set in a first virtual scene (which is a three-dimensional virtual scene), and is configured to simulate an observation position of a user in a real physical space (which is a three-dimensional real space). In some embodiments, the first virtual viewpoint is an observation position at which a camera model is located in the first virtual scene.

A user viewpoint is an observation position of a user in a real physical space.

In a professional training product such as a flight simulator, an automobile simulator, or a ship simulator, the observation position of the user is fixed, and is usually a fixed seat (such as a captain-side seat or a co-pilot-side seat). Therefore, in this application, a fixed first virtual viewpoint is preset in the first virtual scene to observe the first virtual scene, to simulate the user viewing a projection picture in the real physical space.

An image space refers to a two-dimensional pixel array in which a to-be-projected picture obtained through rendering by an image generator is located. For example, a range of coordinates of the pixel array in the image space is (0, 0) to (1023, 1023), with a unit of pixel, and four vertexes of the to-be-projected picture are (0, 0), (0, 1023), (1023, 0), and (1023, 1023).

In this application, pixels on a first scene picture may be updated, to obtain a to-be-projected image. The first scene picture that is not updated and the to-be-projected image are located in a same coordinate system. For example, a range of coordinates of the two-dimensional pixel array in which the first scene picture is located is (0, -1) to (1023, 1022), with a unit of pixel, and four vertexes of the two-dimensional pixel array in which the first scene picture is located are (0, -1), (0, 1022), (1023, -1), and (1023, 1022).

A screen space refers to a pixel array in which a projection picture obtained after projection display is located. In some embodiments, the screen space is a two-dimensional pixel array. In this case, a screen for projection is a straight screen. For example, a range of pixel coordinates on the projection picture is (0, 0) to (4095, 4095), with a unit of pixel, and four vertexes of the projection picture are (0, 0), (0, 4095), (4095, 0), and (4095, 4095). In some embodiments, the screen space is a three-dimensional pixel array. In this case, the screen for projection is a curved screen, and the projection picture further has a depth coordinate. For example, a three-dimensional coordinate on the projection picture is denoted as (x, y, z), and a range of the three-dimensional coordinates on the projection picture is (0, 0, 0) to (4095, 4095, 0.5). A unit of the projection picture on both an axis x and an axis y is pixel, and a unit of the projection picture on an axis z (a coordinate axis in a depth direction) is meter.

An image generator (IG) is a device with an image rendering capability. Usually, a computer with excellent graphic performance is used as the image generator. The image generator runs a rendering engine program to perform image rendering and output.

A projection device is a device with a projection function, and is often referred to as a projector. The projection device is configured to convert an electronic signal (such as a signal transmitted by a computer, a DVD player, or a mobile phone) into an image projected on a medium such as a plane or a wall.

When a data packet enters a network switch, the network switch may check a destination address of the data packet, and forwards the data packet to a port at which the destination address is located, to achieve a purpose of data transmission.

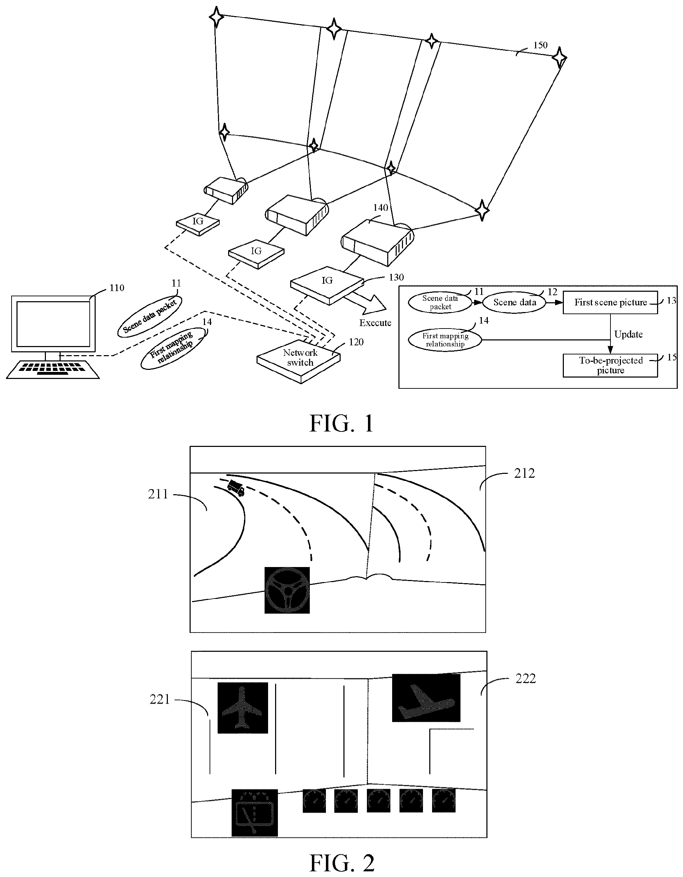

FIG. 1 is a structural diagram of a picture projection system according to an embodiment of this application. The picture projection system includes a computer device 110, a network switch 120, an image generator 130, a projection device 140, and a projection screen 150. The picture projection system is applied to a professional training product such as a flight simulator, an automobile simulator, or a ship simulator.

The computer device 110 is an electronic device on which an application program with a picture projection function is installed. The picture projection function may be a function of a native application in the computer device 110 or a function of a third-party application. The computer device 110 may be a smartphone, a tablet computer, a personal computer, a wearable device, an in-vehicle terminal, or the like. In FIG. 1, an example in which the computer device 110 is a personal computer is used for description, but this is not limited thereto.

In a possible implementation, during picture projection, the computer device 110 transmits a scene data packet 11 to the image generator 130 through the network switch 120. The scene data packet 11 includes data of an entire first virtual scene. The image generator 130 determines three-dimensional space coordinate points falling within a line-of-sight range in the first virtual scene along a line-of-sight range of a first virtual viewpoint, and the image generator 130 obtains sub-data corresponding to the three-dimensional space coordinate points from the scene data packet 11, to obtain scene data 12. The image generator 130 performs scene rendering based on the scene data 12, to obtain a first scene picture 13. The computer device 110 further transmits a first mapping relationship 14 between the first virtual viewpoint and an image space to the image generator 130 through the network switch 120, whereby the image generator 130 updates (corrects) a pixel value of each coordinate point in the first scene picture 13 based on the first mapping relationship 14, to obtain a to-be-projected picture 15. The to-be-projected picture 15 is located in the image space. The image generator 13 transmits the to-be-projected picture 15 to the projection device 140. The projection device 140 performs picture projection, and finally a projection picture is displayed on the projection screen 150.

In some embodiments, the scene data 12 includes relevant data of a three-dimensional model that falls within a field of view of a camera model in the first virtual scene, for example, data for picture rendering, such as coordinates, lighting, colors, and transparency. The camera model is set in the first virtual scene (a three-dimensional virtual scene), an observation position of the camera model is the first virtual viewpoint, and the first virtual scene is acquired based on the field of view of the camera model. The image generator 130 determines a three-dimensional model, such as a plant or a character, falling within the field of view of the camera model. Usually, a three-dimensional model is obtained by combining a plurality of triangles, and vertexes of each triangle are the foregoing three-dimensional space coordinate points.

In some embodiments, the first mapping relationship is a mapping relationship between the first virtual viewpoint and the image space. Specifically, the first mapping relationship is a mapping relationship between both a line-of-sight set starting from the first virtual viewpoint and the first virtual viewpoint and the image space. Alternatively, the first mapping relationship is a mapping relationship between coordinate points in a view plane observed from the first virtual viewpoint along a plurality of lines of sight and coordinate points in the image space.

In some embodiments, the picture projection method provided in this embodiment of this application may be applied to a product with a single or a plurality of projection channels, for example, a product of a vehicle simulator such as a flight simulator, an automobile simulator, or a ship simulator. Each projection channel includes a computer device 110, a network switch 120, an image generator 130, and a projection device 140. A plurality of projection channels share the computer device 110 and the network switch 120.

In some embodiments, the picture projection method provided in this embodiment of this application may be applied to the automobile simulator. During simulated driving of a driver through the automobile simulator, the image generator 130 may determine pixel values corresponding to coordinate points in a to-be-projected driving picture according to scene data corresponding to a virtual viewpoint and a mapping relationship between the virtual viewpoint and an image space, whereby the to-be-projected driving picture is projected onto a display screen of the automobile simulator by using the projection device 140. For example, as shown in FIG. 2, two projection channels are provided in the automobile simulator, and respectively correspond to a first screen projection area 211 (a driver side) and a second screen projection area 212 (a co-driver side) in a screen projection area. Therefore, to meet a driving simulation requirement, the image generator 130 may generate a driver scene picture according to scene data corresponding to a driver virtual viewpoint, and then obtain a to-be-projected driver picture through adjustment according to a mapping relationship between the driver virtual viewpoint and an image space, and the to-be-projected driver picture is projected to the first screen projection area 211 by using the projection device 140.

Similarly, the image generator 130 may generate a co-driver scene picture according to scene data corresponding to a co-driver virtual viewpoint, and then obtain a to-be-projected co-driver picture through adjustment according to a mapping relationship between the co-driver virtual viewpoint and the image space, and the to-be-projected co-driver picture is projected to the second screen projection area 212 by using the projection device 140.

In some embodiments, the picture projection method provided in this embodiment of this application may further be applied to the flight simulator. During flight simulation of a pilot by using the flight simulator, the image generator 130 may determine pixel values corresponding to coordinate points in a to-be-projected flight picture according to scene data corresponding to a virtual viewpoint and a mapping relationship between the virtual viewpoint and an image space, whereby the to-be-projected flight picture is projected onto a display screen of the flight simulator by using the projection device 140 in the flight simulator. For example, as shown in FIG. 2, two projection channels are provided in the flight simulator, and respectively correspond to a first screen projection area 221 (a captain side) and a second screen projection area 222 (a co-pilot side) in a screen projection area. Therefore, to meet a flight simulation requirement, the image generator 130 may generate a captain flight scene picture according to scene data corresponding to a captain-side virtual viewpoint, and then obtain a to-be-projected captain flight picture through adjustment according to a mapping relationship between the captain-side virtual viewpoint and an image space, and the to-be-projected captain flight picture is projected to the first screen projection area 221 by using the projection device 140.

Similarly, the image generator 130 may generate a co-pilot flight scene picture according to scene data corresponding to a co-pilot-side virtual viewpoint, and then obtain a to-be-projected co-pilot flight picture through adjustment according to a mapping relationship between the co-pilot-side virtual viewpoint and the image space, and the to-be-projected co-pilot flight picture is projected to the second screen projection area 222 by using the projection device 140.

In a possible implementation, the picture projection method provided in this embodiment of this application may further be applied to a virtual reality (VR) device or an augmented reality (AR) device. For example, during picture projection performed by the virtual reality device, a mapping relationship between a preset virtual viewpoint and an image space may be first determined, and then a to-be-projected picture is determined according to the mapping relationship and a first scene picture, to perform projection display.

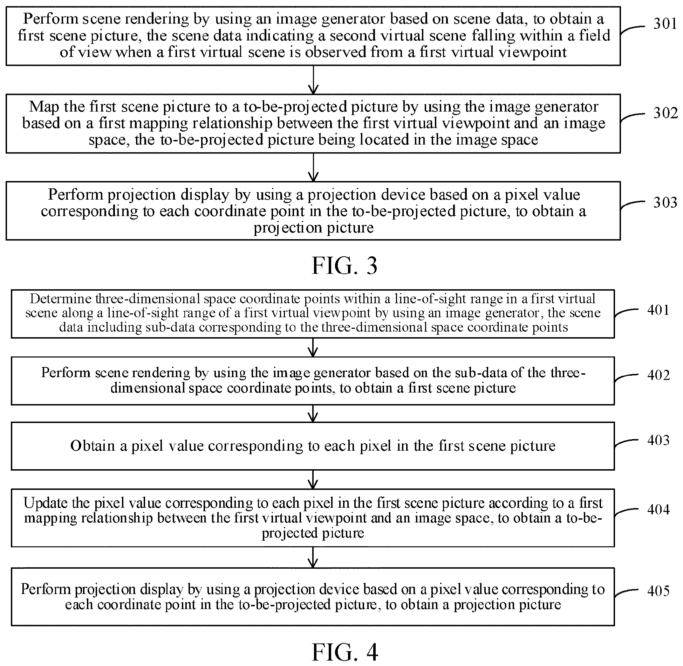

FIG. 3 is a flowchart of a picture projection method according to an exemplary embodiment of this application. This embodiment is described by using an example in which the method is applied to a vehicle simulator such as a flight simulator, an automobile simulator, or a ship simulator. The vehicle simulator at least includes the image generator 130 and the projection device 140 in FIG. 1. The method includes the following operations:

**Operation 301:** Perform scene rendering by using the image generator based on scene data, to obtain a first scene picture, the scene data indicating a scene (namely, a second virtual scene) falling within a field of view when a first virtual scene is observed from a first virtual viewpoint.

The first virtual scene is a virtual scene that is displayed (or provided) when an application program is run on a computer device. The virtual scene may be a simulation environment for the real world, a semi-simulation and semi-fictional virtual environment, or a purely fictional virtual environment. For example, the virtual scene may include sky, a land, an ocean, and the like, where the land may include environmental elements such as a desert, a city, and the like. The first virtual scene may be configured to simulate a physical environment, such as terrain, weather, lighting, and physical interaction, in the real world, and may alternatively simulate an object and a person in the real world. In the virtual scene, an image is created and rendered by using a computational graphics technology, for example, a physical process in which light is reflected, refracted, and scattered on a surface of an object is simulated, and converted into an image. In addition, the first virtual scene may further include audio and interaction elements, such as interactive control, a flight simulator, and a group behavior.

In a possible implementation, considering that the first virtual scene is a three-dimensional virtual scene, and a two-dimensional picture is presented by picture projection, to implement projection display of the three-dimensional virtual scene, the computer device sets a first virtual viewpoint in the first virtual scene, and observes the first virtual scene from the first virtual viewpoint, to simulate observation of a projection picture from a user viewpoint in a real physical space.

A viewpoint is an observation position in a three-dimensional space, and is usually represented by a three-dimensional coordinate point.

The first virtual viewpoint is an observation position set in the first virtual scene (which is a three-dimensional virtual scene), and is configured to simulate an observation position of a user in the real physical space (which is a three-dimensional real space). In some embodiments, the first virtual viewpoint is an observation position at which a camera model is located in the first virtual scene.

The user viewpoint is an observation position of a user in the real physical space.

In a professional training product such as a flight simulator, an automobile simulator, or a ship simulator, the observation position of the user is fixed, and is usually a fixed seat (such as a captain-side seat or a co-pilot-side seat). Therefore, in this application, a fixed first virtual viewpoint is preset in the first virtual scene to observe the first virtual scene, to simulate the user viewing a projection picture in the real physical space.

In a possible implementation, the image generator first determines scene data, such as coordinates, lighting, colors, and transparency, obtained by observing the first virtual scene from the first virtual viewpoint, whereby the image generator performs scene rendering based on the scene data, to obtain the first scene picture.

The image generator is a device with an image rendering capability. Usually, a computer with excellent graphic performance is used as the image generator. The image generator runs a rendering engine program to perform image rendering and output. A dedicated processor with an image rendering processing function is configured in the image generator, such as a graphics processing unit (GPU). The image generator may be further provided with another processor with an image rendering processing function. This is not limited in this embodiment of this application.

The scene data includes data of a scene falling within a field of view when the first virtual scene is observed from the first virtual viewpoint. In some embodiments, the scene data includes relevant data of a three-dimensional model falling within a field of view when the first virtual scene is observed from the first virtual viewpoint, for example, data for picture rendering, such as coordinates, lighting, colors, and transparency. A camera model is set in the first virtual scene (a three-dimensional virtual scene), an observation position of the camera model is the first virtual viewpoint, and the first virtual scene is acquired based on the field of view of the camera model. The image generator 130 determines a three-dimensional model, such as a plant or a character, falling within the field of view of the camera model. Usually, a three-dimensional model is obtained by combining a plurality of triangles, and vertexes of each triangle are the foregoing three-dimensional space coordinate points.

In a possible implementation, the image generator determines three-dimensional space coordinate points within a line-of-sight range in the first virtual scene along a line-of-sight range of the first virtual viewpoint, where the scene data includes sub-data corresponding to the three-dimensional space coordinate points; and scene rendering is performed by using the image generator based on the sub-data of the three-dimensional space coordinate points, to obtain the first scene picture.

**Operation** 302: Map the first scene picture to a to-be-projected picture by using the image generator according to a first mapping relationship between the first virtual viewpoint and an image space, the to-be-projected picture being located in the image space.

In a possible implementation, to accurately project the first scene picture obtained by observing the first virtual scene from the first virtual viewpoint, the computer device further needs to determine the first mapping relationship between the first virtual viewpoint and the image space. Further, the image generator may determine the to-be-projected picture based on the first scene picture and the first mapping relationship between the first virtual viewpoint and the image space.

An image space refers to a two-dimensional pixel array in which a to-be-projected picture obtained through rendering by an image generator is located. For example, a range of coordinates of the pixel array in the image space is (0, 0) to (1023, 1023), with a unit of pixel, and four vertexes of the to-be-projected picture are (0, 0), (0, 1023), (1023, 0), and (1023, 1023).

In this application, the pixel values on the first scene picture may be updated, to obtain the to-be-projected image. The first scene picture that is not updated and the to-be-projected image are located in a same coordinate system. For example, a range of coordinates of the two-dimensional pixel array in which the first scene picture is located is (0, -1) to (1023, 1022), with a unit of pixel, and four vertexes of the two-dimensional pixel array in which the first scene picture is located are (0, -1), (0, 1022), (1023, -1), and (1023, 1022).

The first mapping relationship is a mapping relationship between the first virtual viewpoint and the image space. Specifically, the first mapping relationship is a mapping relationship between both a line-of-sight set starting from the first virtual viewpoint and the first virtual viewpoint and the image space. Alternatively, the first mapping relationship is a mapping relationship between coordinate points in a view plane (the first scene picture is located in the view plane) observed from the first virtual viewpoint along a plurality of lines of sight and coordinate points in the image space. The view plane is an imaging plane of a scene observed from the first virtual viewpoint in the first virtual scene, and the view plane is located between the first virtual viewpoint and the observed scene.

In a possible implementation, the image generator obtains a pixel value corresponding to each three-dimensional coordinate point in the first virtual scene observed from the first virtual viewpoint. Then, the image generator updates the pixel value corresponding to each pixel in the first scene picture according to the first mapping relationship between the first virtual viewpoint and the image space, to obtain the to-be-projected picture.

In some embodiments, the first mapping relationship is a calibrated mapping relationship between two-dimensional coordinate points on the view plane and corresponding two-dimensional coordinate points in the image space. The first mapping relationship is a calibrated mapping relationship between the first scene picture and the to-be-projected picture.

In a possible implementation, the image generator converts the three-dimensional coordinate points in the first virtual scene into two-dimensional coordinate points on the view plane, to obtain the first scene picture. Then, the image generator further updates (corrects or adjusts) the first scene picture according to the first mapping relationship (the first mapping relationship is the calibrated mapping relationship between the first scene picture and the to-be-projected picture), to obtain the to-be-projected picture.

An operation of mapping the first scene picture to the to-be-projected picture is an operation of changing a position of image content in the first scene picture. For example, an "apple" observed by a camera model in the first virtual scene is located at a central position within a field of view, and the "apple" in the first scene picture rendered by the image generator is located at a leftward position. The to-be-projected picture is obtained after mapping according to the first mapping relationship, and the "apple" in the obtained to-be-projected picture is located at the central position. In this case, a correction operation is completed, and the "apple" in the corrected to-be-projected picture is located at a correct position.

In some embodiments, the pixel value includes parameters such as color information, brightness information, and depth information. In some embodiments, the pixel value further includes other parameters that can represent a pixel feature. This is not limited in this embodiment of this application.

**Operation 303:** Perform projection display by using the projection device based on the pixel value corresponding to each coordinate point in the to-be-projected picture, to obtain the projection picture.

In a possible implementation, after the to-be-projected picture is determined, projection display may be performed according to the pixel value corresponding to each coordinate point in the to-be-projected picture by using the projection device, to obtain the projection picture.

In conclusion, in this embodiment of this application, after the first scene picture is obtained by performing the scene rendering through the image generator, the first scene picture is not directly projected. Instead, the to-be-projected picture is determined according to the first mapping relationship between the first virtual viewpoint and the image space. The projection display is performed by using the projection device according to the pixel value corresponding to each coordinate point of the to-be-projected picture, to obtain the projection picture. The projection picture obtained through the foregoing process is consistent with a picture obtained by observing the first virtual scene from the first virtual viewpoint.

In this application, by simulating the scene in which the projection picture is actually viewed by a user, the first virtual viewpoint is set in the first virtual scene, and image correction is performed according to the first mapping relationship between the first virtual viewpoint and the image space, whereby accuracy of a picture observed by the user located at a user viewpoint (a real viewpoint) is improved. Compared with a correction method in the related art, no camera needs to be used for shooting. The correction method in this application is relatively simple and highly automated.

In a possible implementation, to further meet requirements on efficiency and accuracy of the picture projection, the computer device may perform a calibration procedure in advance before the picture projection, and determine the first mapping relationship between the first virtual viewpoint and the image space based on a second mapping relationship between the image space and a screen space and a third mapping relationship between the first virtual viewpoint and the screen space. Further, during running, the first scene picture may be updated (corrected) based on the first mapping relationship, to obtain the to-be-projected picture.

FIG. 4 is a flowchart of a picture projection method according to an exemplary embodiment of this application. This embodiment is described by using an example in which the method is applied to a vehicle simulator such as a flight simulator, an automobile simulator, or a ship simulator. The vehicle simulator includes the computer device 110, the image generator 130, and the projection device 140 in FIG. 1. The method includes the following operations:

**Operation 401:** Determine three-dimensional space coordinate points within a line-of-sight range in a first virtual scene along a line-of-sight range of a first virtual viewpoint by using the image generator, the scene data including sub-data corresponding to the three-dimensional space coordinate points.

In a possible implementation, to accurately obtain a first scene picture observed from the first virtual viewpoint, the image generator may determine the three-dimensional space coordinate points within the line-of-sight range in the first virtual scene from the first virtual viewpoint along the line-of-sight range of the first virtual viewpoint. The image generator obtains the sub-data corresponding to the three-dimensional space coordinate points. For example, the image generator obtains data such as colors, lighting, and transparency corresponding to the three-dimensional space coordinate points.

**Operation 402:** Perform scene rendering by using the image generator based on the sub-data of the three-dimensional space coordinate points, to obtain the first scene picture.

Further, after all three-dimensional space coordinate points within the line-of-sight range corresponding to the first virtual viewpoint are obtained, an image may be generated by the image generator according to the sub-data of the three-dimensional space coordinate points, to obtain the first scene picture.

**Operation 403:** Obtain a pixel value corresponding to each pixel in the first scene picture.

In a possible implementation, after the first scene picture is generated, the image generator may determine the pixel value corresponding to each pixel in the first scene picture.

**Operation 404:** Update the pixel value corresponding to each pixel in the first scene picture by using the image generator according to a first mapping relationship between the first virtual viewpoint and an image space, to obtain a to-be-projected picture.

In a possible implementation, after the pixel value corresponding to each pixel in the first scene picture is obtained, the image generator updates (corrects or converts) the pixel value corresponding to each pixel in the first scene picture according to the first mapping relationship between the first virtual viewpoint and the image space, to obtain the to-be-projected picture. Update is an operation of moving image content. For example, before the update, the first scene picture includes an "apple" in the center, and after the update, the "apple" in the obtained to-be-projected picture is located at a leftward position.

In a possible implementation, to determine the first mapping relationship between the first virtual viewpoint and the image space, the computer device may first obtain the second mapping relationship between the image space and the screen space and the third mapping relationship between the first virtual viewpoint and the screen space, and then determine the first mapping relationship between the first virtual viewpoint and the image space in an inverse mapping calculation manner according to the second mapping relationship and the third mapping relationship. The process may specifically include the following three sub-operations. The following sub-operations are performed by the computer device 110 in FIG. 1.

Operation 404A: Obtain the second mapping relationship between the image space and the screen space by using the computer device, the projection picture being located in the screen space.

An image space refers to a two-dimensional pixel array in which a to-be-projected image obtained through rendering by an image generator is located. For example, a range of coordinates of the pixel array in the image space is (0, 0) to (1023, 1023), with a unit of pixel, and four vertexes of the to-be-projected picture are (0, 0), (0, 1023), (1023, 0), and (1023, 1023).

In this application, pixels on the first scene picture may be updated, to obtain the to-be-projected image. The first scene picture that is not updated and the to-be-projected image are located in a same coordinate system. For example, a range of coordinates of the two-dimensional pixel array in which the first scene picture is located is (0, -1) to (1023, 1022), with a unit of pixel, and four vertexes of the two-dimensional pixel array in which the first scene picture is located are (0,-1), (0, 1022), (1023, -1), and (1023, 1022).

The screen space refers to a pixel array in which a projection picture obtained after projection display is located. In some embodiments, the screen space is a two-dimensional pixel array. In this case, a screen for projection is a straight screen. For example, a range of pixel coordinates on the projection picture is (0, 0) to (4095, 4095), with a unit of pixel, and four vertexes of the projection picture are (0, 0), (0, 4095), (4095, 0), and (4095, 4095). In some embodiments, the screen space is a three-dimensional pixel array. In this case, the screen for projection is a curved screen, and the projection picture further has a depth coordinate. For example, a three-dimensional coordinate on the projection picture is denoted as (x, y, z), and a range of the three-dimensional coordinates on the projection picture is (0, 0, 0) to (4095, 4095, 0.5). A unit of the projection picture on both an axis x and an axis y is pixel, and a unit of the projection picture on an axis z (a coordinate axis in a depth direction) is meter.

The second mapping relationship refers to a mapping relationship between the image space and the screen space, namely, a mapping between coordinate points in the image space and coordinate points in the screen space. When the to-be-projected image is projected to the screen by using the projection device, because a size of the to-be-projected image is different from a size, a shape, and the like of the screen, the projection picture may be distorted and deformed. Therefore, to ensure accuracy and completeness of the projection picture obtained through projection and enable the picture to adapt to the screen, mapping may be performed according to the second mapping relationship, whereby a finally obtained to-be-projected picture matches the projection screen.

In a possible implementation, to determine the second mapping relationship between the image space and the screen space, the computer device may set a plurality of first mark points, and align the first mark points with preset second mark points in the screen space, whereby the second mapping relationship between the image space and the screen space is determined according to coordinate points of the first mark points in the image space and coordinate points of the second mark points in the screen space.

In some embodiments, the first mark points and the second mark points may be symbols with significant feature marks such as a cross-hair and a pentagram. This is not limited in this embodiment of this application.

In a possible implementation, the computer device performs projection display on at least three first mark points by using the projection device, and enables the at least three first mark points to be in a one-to-one mapping with at least three second mark points set on the projection screen. The at least three second mark points are non-collinear points in the screen space. Further, after enabling the at least three first mark points to be in the one-to-one mapping with the at least three second mark points, the computer device may acquire a first coordinate set of the at least three first mark points in the image space. The first coordinate set includes a coordinate of each first mark point of the at least three first mark points in the image space. The computer device obtains a second coordinate set of the at least three second mark points in the screen space. The second coordinate set includes a coordinate of each second mark point of the at least three second mark points in the screen space.

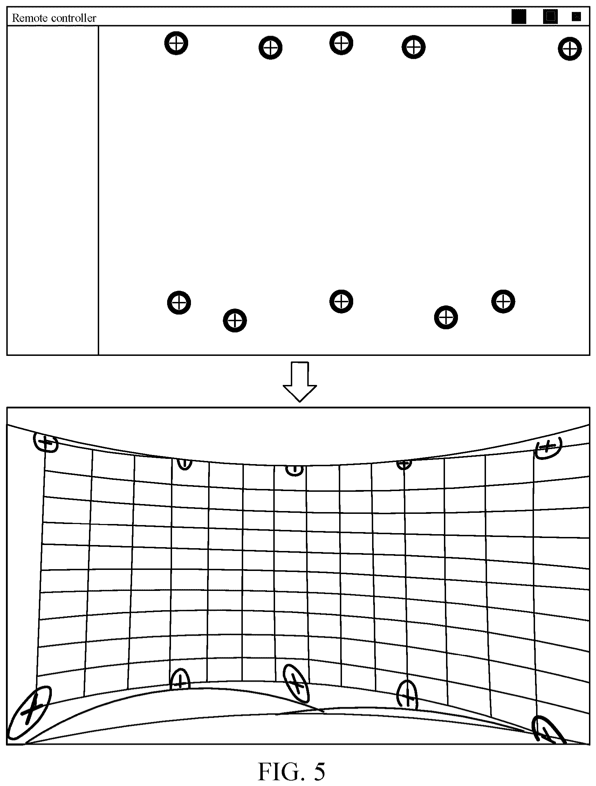

For example, as shown in FIG. 5, a plurality of second mark points may be preset on a projection screen.

For example, as shown in FIG. 5, the computer device projects a plurality of first mark points onto the projection screen by using the projection device, whereby the first mark points are aligned with second mark points.

In some embodiments, considering that during the picture projection, the screen may not be a complete plane and may be any curved surface with no self-intersection, whereby the coordinates of the second mark points in the screen space may be denoted as three-dimensional coordinates. Therefore, to achieve the mapping with the three-dimensional coordinates of the at least three second mark points, the coordinates of the first mark points in the image space may further be denoted as three-dimensional coordinates, and the three-dimensional coordinates corresponding to the first mark points have a same value on a coordinate axis in a depth direction.

In some embodiments, the first coordinate set may be denoted as $P_{img}$, and the second coordinate set may be denoted as $P_{screen}$,

Further, the computer device may determine the second mapping relationship between the image space and the screen space according to the first coordinate set, the second coordinate set, a shape of the projection screen, and a projection matrix corresponding to the projection device.

In some embodiments, the shape of the projection screen may be denoted as S, the projection matrix may be denoted as $P_{proj}$, and the second mapping relationship $M_p$ between the image space and the screen space may be denoted as $P_{screen} = M_p (S, P_{proj}, P_{img})$.

In some embodiments, to improve the efficiency of determining the second mapping relationship, during projection of the first mark points by using the projection device, the computer device may further employ a camera to assist in the alignment between the first mark points and the second mark points. In a possible implementation, the computer device first projects and displays the at least three first mark points by using the projection device, to obtain a mark projection picture, and further shoots the mark projection picture by using the camera, to obtain a shot picture. The shot picture may include at least three first mark points and at least three second mark points, whereby the computer device may align the at least three first mark points with the at least three second mark points according to the shot picture.

In some embodiments, to improve efficiency of the alignment between the first mark points and the second mark points, the second mark points may further be set as controllable light-emitting mark points in the screen space. This is not limited in this embodiment of this application.

Operation 404B: Obtain a third mapping relationship between the first virtual viewpoint and the screen space by using the computer device.

The third mapping relationship is a mapping relationship between a line-of-sight set starting from the first virtual viewpoint and the screen space. Specifically, the third mapping relationship refers to a mapping between coordinate points in a view plane observed from the first virtual viewpoint along a plurality of lines of sight and coordinate points in the screen space.

In an embodiment, a line-of-sight set from the first virtual viewpoint to the second coordinate set is determined based on the second coordinate set of the at least three second mark points in the screen space; and the third mapping relationship between the first virtual viewpoint and the screen space is determined based on the first virtual viewpoint, the line-of-sight set, the second coordinate set, and the shape of the projection screen.

For example, a coordinate of the first virtual viewpoint is located in a coordinate system of the first virtual scene. For example, the coordinate of the first virtual viewpoint is (a, b, c). The second coordinate set is located in a coordinate system of the screen space. For example, a coordinate of any second mark point in the second coordinate set is (a', b', c'). Therefore, a corresponding line of sight may be denoted as (a'-a, b'-b, c'-c).

In some embodiments, the first virtual viewpoint may be denoted as $O_{view}$, the line-of-sight set starting from the first virtual viewpoint may be denoted as $V_{ray}$, the second coordinate set may be denoted as $P_{screen}$, the shape of the projection screen may be denoted as S, and the third mapping relationship $M_s$ between the first virtual viewpoint and the screen space may be denoted as $P_{screen} = M_s(S, O_{view}, V_{ray})$.

Operation 404C: Obtain the first mapping relationship between the first virtual viewpoint and the image space by using the computer device through inverse mapping calculation based on the second mapping relationship and the third mapping relationship.

Further, after the second mapping relationship between the image space and the screen space and the third mapping relationship between the first virtual viewpoint and the screen space are obtained, the computer device may determine the first mapping relationship between the first virtual viewpoint and the image space in an inverse mapping calculation manner.

In a possible implementation, the computer device determines two mapping relationship expressions corresponding to the second coordinate set according to the second mapping relationship and the third mapping relationship, and determines the first mapping relationship between the first virtual viewpoint and the image space in the inverse mapping calculation manner based on the two mapping relationship expressions.

In some embodiments, because the second mapping relationship between the image space and the screen space is determined based on the mapping between the first coordinate set and the second coordinate set, and the shape of the projection screen has no self-intersected surface, namely, the coordinate points represented by the second mapping relationship are in a one-to-one mapping, the second mapping relationship is reversible, and each inverse mapping has only a unique solution, whereby the computer device may calculate the inverse mapping of the second mapping relationship, and denote the second coordinate set in the second mapping relationship by using the third mapping relationship, to obtain the first mapping relationship between the first virtual viewpoint and the image space.

In some embodiments, $P_{screen} = M_p(S, P_{proj}, P_{img}) = M_s(S, O_{view}, V_{ray})$ may be obtained according to the second mapping relationship $M_p$ between the image space and the screen space and the third mapping relationship $M_s$ between the first virtual viewpoint and the screen space, whereby the first mapping relationship $M_g$, namely,

$$P_{img} = M_g\left(S, O_{view}, P_{proj}, V_{ray}\right) = M_p^{-1}\left(S, P_{proj}, M_s\left(S, O_{view}, V_{ray}\right)\right)$$

between the first virtual viewpoint and the image space, may be obtained by calculating inverse mapping of $M_p$ for $P_{img}$.

**Operation** 405: Perform projection display by using the projection device based on a pixel value corresponding to each coordinate point in the to-be-projected picture, to obtain a projection picture.

For a specific implementation of operation 405, refer to operation 303. Details are not repeated herein in this embodiment.

In the foregoing embodiment, by projecting a plurality of first mark points, the first mark points in the image space are in a one-to-one mapping with the second mark points in the screen space, whereby the second mapping relationship between the image space and the screen space is determined. The third mapping relationship between the first virtual viewpoint and the screen space is determined according to the line-of-sight set from the first virtual viewpoint to each mark point in the screen space, whereby the first mapping relationship between the first virtual viewpoint and the image space is obtained by means of inverse mapping calculation. Further, in a picture projection stage, the to-be-projected picture may be determined directly according to the first scene picture and the first mapping relationship. Therefore, the picture projection is performed by using the projection device based on the pixel value of the to-be-projected picture to obtain the projection picture, meeting the requirements on efficiency and accuracy of the picture projection.

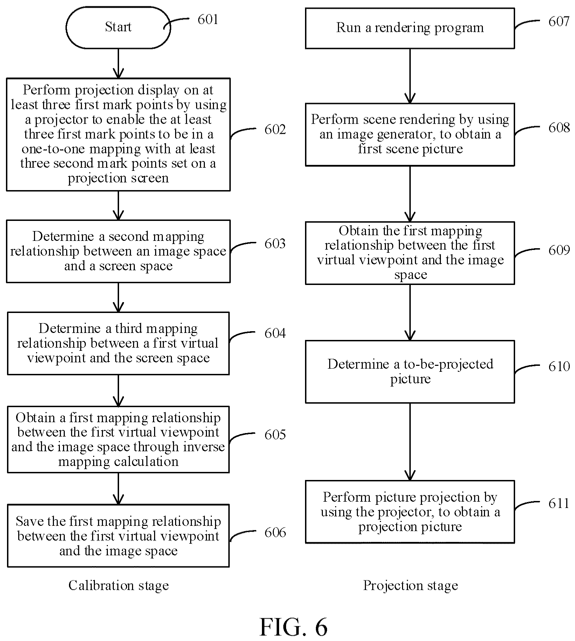

FIG. 6 is a schematic flowchart of mapping relationship determination and picture projection according to an exemplary embodiment of this application. The process may be divided into a calibration stage (determining a mapping relationship) and a projection stage (performing picture projection based on the mapping relationship).

**Operation 601:** Start.

First, a computer device runs a main control application program, and an image generator runs a client application program. The main control application program includes three parts: a graphical interface, a network, and an algorithm. The graphical interface is configured to receive an input operation of a user and transmit an instruction to a client through a network connection. The algorithm part is configured for calculating a mapping relationship. The client is application software that is run on the image generator, and includes two parts: a network and display output. The client receives the instruction transmitted by a main control end through the network, generates a picture, and further transmits picture data to a projector by using a display output function.

**Operation 602:** Perform projection display on at least three first mark points by using the projector to enable the at least three first mark points to be in a one-to-one mapping with at least three second mark points set on a projection screen.

First, at least three second mark points are preset on the projection screen, and the three second mark points are non-collinear points. Second, the computer device receives a manual operation of a user on the graphical interface, adjusts a position of the first mark point according to the manual operation of the user, and further performs projection display on the at least three first mark points by using the projector, until the at least three first mark points are in the one-to-one mapping with the at least three second mark points set on the projection screen.

**Operation 603:** Determine a second mapping relationship between an image space and a screen space.

When the first mark points are in the one-to-one mapping with the second mark points, the computer device obtains a first coordinate set of the at least three first mark points in the image space and a second coordinate set of the at least three second mark points in the screen space, and determines the second mapping relationship $M_p$ between the image space and the screen space according to a projection matrix corresponding to the projector and a shape of the projection screen.

**Operation 604:** Determine a third mapping relationship between the first virtual viewpoint and the screen space.

The computer device obtains the third mapping relationship according to the first virtual viewpoint, a line-of-sight set starting from the first virtual viewpoint, the second coordinate set, and the shape of the projection screen.

For example, the first virtual viewpoint may be denoted as $O_{view}$, the line-of-sight set starting from the first virtual viewpoint may be denoted as $V_{ray}$, the second coordinate set may be denoted as $P_{screen}$, the shape of the projection screen may be denoted as S, and the third mapping relationship $M_s$ between the first virtual viewpoint and the screen space may be denoted as $P_{screen} = M_s(S, O_{view}, V_{ray})$.

**Operation 605:** Obtain a first mapping relationship between the first virtual viewpoint and the image space through inverse mapping calculation.

Further, after the second mapping relationship and the third mapping relationship are determined, the computer device determines the first mapping relationship $M_g$ between the first virtual viewpoint and the image space through inverse mapping calculation, thereby completing a procedure of the calibration stage.

**Operation 606:** Save the first mapping relationship between the first virtual viewpoint and the image space.

**Operation 607:** Run a rendering program.

In a picture projection stage, the image generator starts a picture rendering program.

**Operation 608:** Perform scene rendering by using the image generator, to obtain a first scene picture.

The computer device transmits image data to the image generator, and the image generator performs scene rendering, to obtain the first scene picture. The first scene picture is obtained by observing a first virtual scene from a first virtual viewpoint.

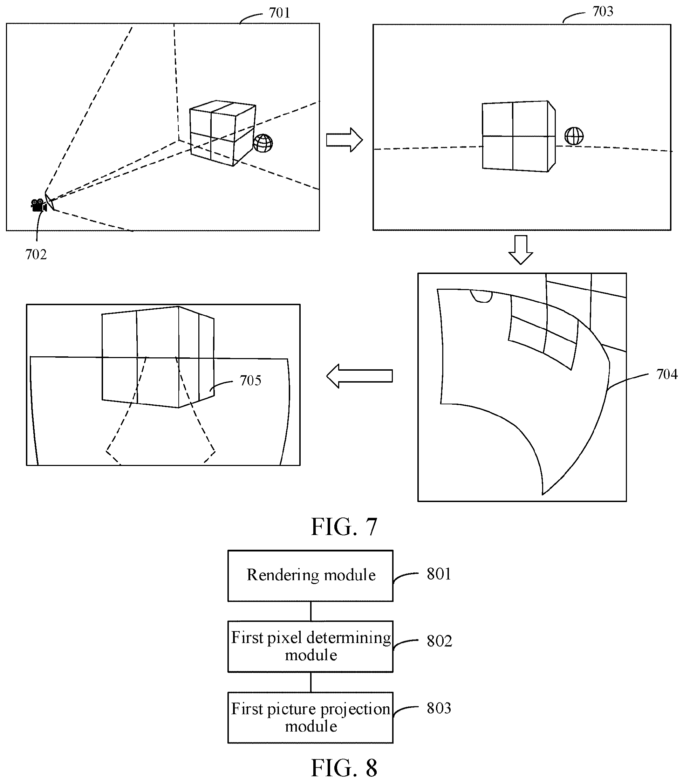

For example, as shown in FIG. 7, the computer device observes a first virtual scene 701 from a first virtual viewpoint 702, and then obtains a first scene picture 703 through scene rendering.

**Operation 609:** Obtain the first mapping relationship between the first virtual viewpoint and the image space.

Further, the image generator obtains the first mapping relationship $M_g$ between the first virtual viewpoint and the image space.

**Operation 610:** Determine a to-be-projected picture.

The image generator updates a pixel value corresponding to each coordinate point in the first scene picture based on the first mapping relationship between the first virtual viewpoint and the image space, to obtain the to-be-projected picture.

**Operation 611:** Perform picture projection by using the projector, to obtain a projection picture.

The projection picture may be obtained by performing picture projection through the projector based on the pixel value corresponding to each coordinate point in the to-be-projected picture.

For example, as shown in FIG. 7, projection is performed by the projector, to obtain a projection picture 704 on a projection screen, whereby the projection picture 704 is observed from a user viewpoint in a real physical space, to obtain an observation picture 705.

In a possible implementation, after the picture projection is performed by using the projection device to obtain the projection picture, to verify the determined first mapping relationship between the first virtual viewpoint and the image space, a theodolite may further be employed to perform accuracy verification, and the first mapping relationship is corrected according to a verification result, to further improve the accuracy of the picture projection.

In a possible implementation, during picture projection performed by a plurality of projection devices, to ensure that each projection device can accurately project the picture, the computer device further needs to determine the first mapping relationship between the first virtual viewpoint and the image space corresponding to each image generator, and the first scene pictures are mapped by each image generator to the to-be-projected picture in each image space according to the first mapping relationship between the first virtual viewpoint and respective image space. To be specific, the pixel values corresponding to the coordinate points of the to-be-projected picture in each image space are determined separately. Further, projection display is performed by using each projection device according to the pixel values corresponding to the coordinate points in the to-be-projected picture in each image space, to obtain a plurality of projection pictures.

In a possible implementation, considering that during the picture projection jointly performed by a plurality of projection devices, to ensure completeness of the picture projection, a picture overlap usually exists between the projection pictures corresponding to the projection devices, causing screen display brightness of a picture overlapping area to be excessively higher than another picture non-overlapping area. Therefore, after projecting a plurality of projection pictures, the computer device may further determine an overlapping area of the projection pictures according to an overlapping situation of the plurality of projection pictures and shapes of projection screens corresponding to the projection devices, to facilitate brightness adjustment for the picture overlapping area.

For example, as shown in FIG. 1, during the picture projection performed by using three projection devices, an overlapping area of two pictures may occur. Therefore, to keep consistency of overall brightness in the projection pictures as much as possible, the brightness adjustment may be performed independently for the overlapping area of the two pictures.

In some embodiments, after the picture overlapping area is determined, a physical barrier may be manually added to a projection screen area corresponding to the picture overlapping area, or a gradient mask may be added to the picture, to reduce display brightness of the picture overlapping area.

In a possible implementation, after projecting the plurality of projection pictures, the computer device may further determine an overlapping coordinate point corresponding to each projection device in a respective to-be-projected picture based on the second mapping relationship between the screen space and the image space of each projection device. The overlapping coordinate point is a coordinate point that is overlapped after being mapped to the screen space, whereby the computer device may directly adjust a brightness value of the overlapping coordinate point based on screen projection brightness, enabling the projection brightness corresponding to the overlapping coordinate point to be the same as projection brightness corresponding to other non-overlapping coordinate points.

In the foregoing embodiment, during the picture projection performed by using a plurality of projection devices, the picture overlapping area between the plurality of projection pictures is determined, and brightness adjustment is performed on each pixel in the picture overlapping area according to the brightness of the projection screen, whereby a display effect of picture projection is optimized, and picture projection experience is enhanced.

In a possible implementation, it is considered that there may be a plurality of users observing the projection pictures during the picture projection. For example, when the picture projection method is applied to an automobile simulator, to meet different projection viewing requirements of the driver and the co-driver, the mapping relationships between different virtual viewpoints and the screen space need to be determined.

For example, in FIG. 2 showing a schematic diagram of an application of a picture projection method in an automobile simulator, a screen projection area includes the first screen projection area 211 corresponding to the driver seat viewpoint and the second screen projection area 212 corresponding to the co-driver seat viewpoint. In a single driving picture projection process, the computer device can determine the pixel value of each coordinate point of a driving picture in the image space only according to a mapping relationship between a unique virtual viewpoint and the image space, to perform picture projection. Therefore, to meet a display switching requirement on the projection picture during simulated driving, the computer device may provide a viewpoint selection function, and the driver may select the first virtual viewpoint corresponding to the driver seat viewpoint or a second virtual viewpoint corresponding to the co-driver seat viewpoint according to the current picture projection requirement.

For another example, in FIG. 2 showing a schematic diagram of an application of a picture projection method in a flight simulator, a screen projection area includes the first screen projection area 221 corresponding to a captain-side seat viewpoint and the second screen projection area 222 corresponding to a co-pilot-side seat viewpoint. In a single flight picture projection process, the computer device can determine the pixel value of each coordinate point of a flight picture in the image space only according to the mapping relationship between the unique virtual viewpoint and the image space, to perform picture projection. Therefore, to meet a projection picture display switching requirement during a simulated flight, the computer device may provide a viewpoint selection function. Pilots select the first virtual viewpoint corresponding to the captain-side seat viewpoint or the second virtual viewpoint corresponding to the co-pilot-side seat viewpoint according to a current picture projection requirement.

In a possible implementation, the second virtual viewpoint has a fourth mapping relationship between the second virtual viewpoint and the image space. The computer device obtains a fifth mapping relationship between the second virtual viewpoint and the screen space, and determines the fourth mapping relationship between the second virtual viewpoint and the image space through inverse mapping calculation according to the second mapping relationship between the image space and the screen space and the fifth mapping relationship.

Further, before the picture projection, the computer device may display a viewpoint selection control for the user. The viewpoint selection control is configured to select different virtual viewpoints for picture projection, whereby the computer device receives a trigger operation of the user for the viewpoint selection control, and determines a target virtual viewpoint. For example, the computer device determines that the first virtual viewpoint is selected from the first virtual viewpoint and the second virtual viewpoint in response to the trigger operation for the viewpoint selection control.

The computer device determines a target pixel value corresponding to each coordinate point in the image space according to the target virtual viewpoint (the selected virtual viewpoint) and a mapping relationship between the target virtual viewpoint and the image space, and performs projection display by using the projection device according to the target pixel value corresponding to each coordinate point in the image space, to obtain a target projection picture.

In the foregoing embodiment, the mapping relationships between different virtual viewpoints and the image space are determined, before the picture projection, the viewpoint selection control is displayed for the user, and the target virtual viewpoint is selected by the user, whereby the target pixel value corresponding to each coordinate point in the image space is determined according to the target virtual viewpoint and the mapping relationship between the target virtual viewpoint and the image space for picture projection, thereby further improving accuracy of the picture projection, and optimizing user experience of the picture projection.

FIG. 8 is a structural block diagram of a picture projection apparatus according to an exemplary embodiment of this application. The apparatus is configured in a vehicle simulator, and the vehicle simulator includes an image generator and a projection device. The apparatus includes:

a rendering module 801, configured to perform scene rendering based on scene data, to obtain a first scene picture, the scene data indicating a scene (namely, a second virtual scene) falling within a field of view when a first virtual scene is observed from a first virtual viewpoint;

a first pixel determining module 802, configured to map the first scene picture to a to-be-projected picture according to a first mapping relationship between the first virtual viewpoint and an image space, the to-be-projected picture being located in the image space; and

a first picture projection module 803, configured to perform projection display by using the projection device based on a pixel value corresponding to each coordinate point in the to-be-projected picture, to obtain a projection picture.

In some embodiments, the rendering module 801 is further configured to:

determine three-dimensional space coordinate points within a line-of-sight range in the first virtual scene along a line-of-sight range of the first virtual viewpoint, the scene data including sub-data corresponding to the three-dimensional space coordinate points;

perform scene rendering based on the sub-data corresponding to the three-dimensional space coordinate points, to obtain the first scene picture; and

the first pixel determining module 802 is further configured to:

obtain a pixel value corresponding to each pixel in the first scene picture; and

update the pixel value corresponding to each pixel in the first scene picture according to the first mapping relationship between the first virtual viewpoint and the image space, to obtain the to-be-projected picture.

In some embodiments, the apparatus further includes:

a first obtaining module, configured to obtain a second mapping relationship between the image space and a screen space, the projection picture being located in the screen space;

a second obtaining module, configured to obtain a third mapping relationship between the first virtual viewpoint and the screen space; and

a first mapping calculation module, configured to obtain the first mapping relationship between the first virtual viewpoint and the image space through inverse mapping calculation based on the second mapping relationship and the third mapping relationship.

In some embodiments, the first obtaining module is configured to:

perform projection display on at least three first mark points to enable the at least three first mark points to be in a one-to-one mapping with at least three second mark points set on a projection screen, where the at least three second mark points are non-collinear points;

obtain a first coordinate set of the at least three first mark points in the image space after the at least three first mark points are in a one-to-one mapping with the at least three second mark points;

obtain a second coordinate set of the at least three second mark points in the screen space; and

determine the second mapping relationship between the image space and the screen space based on the first coordinate set, the second coordinate set, a shape of the projection screen, and a projection matrix corresponding to the projection device.

In some embodiments, the first obtaining module is further configured to:

perform projection display on the at least three first mark points, to obtain a mark projection picture;

shoot the mark projection picture by using a camera, to obtain a shot picture, the shot picture including the at least three first mark points and the at least three second mark points; and

align the at least three first mark points with the at least three second mark points based on the shot picture.

In some embodiments, the second obtaining module is configured to:

determine a line-of-sight set from the first virtual viewpoint to the second coordinate set based on the second coordinate set of the at least three second mark points in the screen space; and

determine the third mapping relationship between the first virtual viewpoint and the screen space based on the first virtual viewpoint, the line-of-sight set, the second coordinate set, and the shape of the projection screen.

In some embodiments, the first mapping calculation module is configured to:

determine two mapping relationship expressions corresponding to the second coordinate set based on the second mapping relationship and the third mapping relationship; and

determine the first mapping relationship between the first virtual viewpoint and the image space in an inverse mapping calculation manner based on the two mapping relationship expressions.

In some embodiments, when at least two projection devices and at least two image generators are present, the apparatus further includes:

a mapping determining module, configured to determine a first mapping relationship between the first virtual viewpoint and the image space corresponding to each image generator;

a second pixel determining module, configured to map each first scene picture to the to-be-projected picture in each image space based on the first mapping relationship between the first virtual viewpoint and each image space;

a second picture projection module, configured to perform projection display by using each projection device based on the pixel values corresponding to the coordinate points of the to-be-projected picture in each image space, to obtain a plurality of projection pictures; and

an area determining module, configured to determine a picture overlapping area based on an overlapping situation of the plurality of projection pictures and the shape of the projection screen corresponding to each projection device, to adjust brightness of the picture overlapping area.

In some embodiments, the apparatus further includes:

a coordinate determining module, configured to determine an overlapping coordinate point corresponding to each projection device in the respective to-be-projected picture based on the second mapping relationship between the screen space and the image space of each projection device, the overlapping coordinate point being a coordinate point that is overlapped after being mapped to the screen space; and

a brightness adjustment module, configured to adjust a brightness value of the overlapping coordinate point based on screen projection brightness, causing the projection brightness corresponding to the overlapping coordinate point to be the same as the projection brightness corresponding to other non-overlapping coordinate points.

In some embodiments, the apparatus further includes:

a display module, configured to display a viewpoint selection control before the picture projection; and

a viewpoint determining module, configured to determine that the first virtual viewpoint is selected from the first virtual viewpoint and a second virtual viewpoint in response to a trigger operation on the viewpoint selection control. The first virtual viewpoint corresponds to the first mapping relationship, and the second virtual viewpoint corresponds to a fourth mapping relationship between the second virtual viewpoint and the image space.

In conclusion, in this embodiment of this application, after the first scene picture is obtained by performing the scene rendering through the image generator, the first scene picture is not directly projected. Instead, the to-be-projected picture is determined according to the first mapping relationship between the first virtual viewpoint and the image space. The projection display is performed by using the projection device according to the pixel value corresponding to each coordinate point of the to-be-projected picture, to obtain the projection picture. The projection picture obtained through the foregoing process is consistent with a picture obtained by observing the first virtual scene from the first virtual viewpoint.

In this application, by simulating the scene in which the projection picture is actually viewed by a user, the first virtual viewpoint is set in the first virtual scene, and image correction is performed according to the first mapping relationship between the first virtual viewpoint and the image space, whereby the accuracy of a picture observed by the user located at a user viewpoint (a real viewpoint) is improved. Compared with a correction method in the related art, no camera needs to be used for shooting. The correction method in this application is relatively simple and highly automated.

In addition, the apparatus provided in the foregoing embodiment is illustrated only with an example of division of the foregoing function modules. In practical applications, the foregoing functions may be allocated to and completed by different function modules according to requirements. Namely, the internal structure of the apparatus is divided into different function modules to complete all or some of the functions described above. In addition, the apparatus provided in the foregoing embodiment and the method embodiment fall within the same conception. For details of an implementation process, refer to the method embodiment. Details are not described herein again.

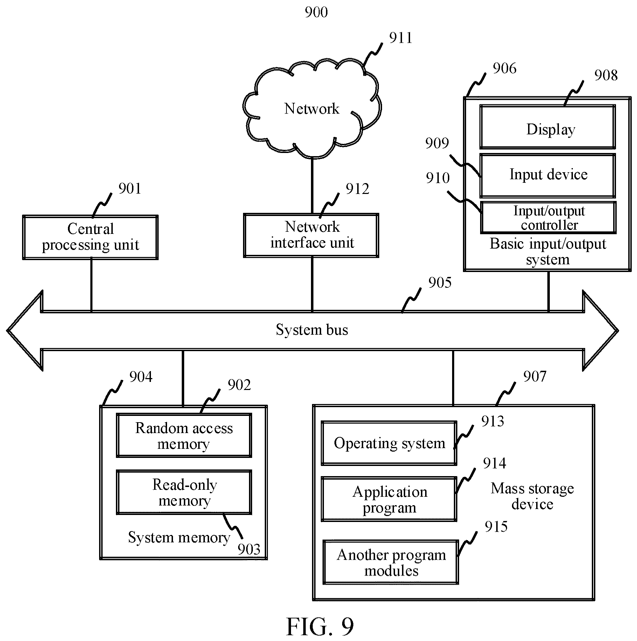

FIG. 9 is a schematic structural diagram of a computer device according to an exemplary embodiment of this application. Specifically, the computer device 900 includes a central processing unit (CPU) 901, a system memory 904 including a random access memory 902 and a read-only memory 903, and a system bus 905 connecting the system memory 904 and the central processing unit 901. The computer device 900 further includes a basic input/output (I/O) system 906 assisting in information transmission between devices in the computer, and a mass storage device 907 configured to store an operating system 913, an application program 914, and another program module 915.

The basic I/O system 906 includes a display 908 configured to display information and an input device 909 such as a mouse or a keyboard for a user to input the information. The display 908 and the input device 909 are both connected to the CPU 901 by using an input/output controller 910 connected to the system bus 905. The basic I/O system 906 may further include the input/output controller 910 for receiving and processing inputs from a plurality of other devices such as a keyboard, a mouse, and an electronic stylus. Similarly, the input/output controller 910 further provides an output to a display screen, a printer, or another type of output device.

The mass storage device 907 is connected to the CPU 901 by using a mass storage controller (not shown) connected to the system bus 905. The mass storage device 907 and a computer-readable medium associated with the mass storage device provide non-volatile storage to the computer device 900. To be specific, the mass storage device 907 may include a computer-readable medium (not shown) such as a hard disk or a drive.

Generally, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes a random access memory (RAM), a read only memory (ROM), a flash memory or another solid-state storage technology, a compact disc read-only memory (CD-ROM), a digital versatile disc (DVD) or another optical memory, a magnetic cassette, a magnetic tape, magnetic disc storage or another magnetic storage device. Certainly, a person skilled in the art may learn that the computer storage medium is not limited to the foregoing several types. The system memory 904 and the mass storage device 907 may be collectively referred to as a memory.

The memory stores one or more programs. The one or more programs are configured to be executed by one or more central processing units 901. The one or more programs include instructions for implementing the above methods. The central processing unit 901 executes the one or more programs to implement the methods provided in the above method embodiments.

According to the embodiments of this application, the computer device 900 may further be connected, through a network such as the Internet, to a remote computer on the network and run. To be specific, the computer device 900 may be connected to a network 911 by using a network interface unit 912 connected to the system bus 905, or may be connected to another type of network or a remote computer system (not shown) by using the network interface unit 912.

An embodiment of this application further provides a computer-readable storage medium. The readable storage medium has at least one instruction stored therein. The at least one instruction is loaded and executed by a processor to implement the picture projection method provided in the foregoing embodiments.

Alternatively, the computer-readable storage medium may include: a ROM, a RAM, a solid state drive (SSD), an optical disc, or the like. The RAM may include a resistance random access memory (ReRAM) and a dynamic random access memory (DRAM).

An embodiment of this application provides a computer program product, including computer instructions, the computer instructions being stored in a computer-readable storage medium. A processor of a computer device reads the computer instructions from the computer-readable storage medium, and the processor executes the computer instructions, causing the computer device to perform the picture projection method in the foregoing embodiments.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made within the spirit and principle of this application shall fall within the protection scope of this application.

**Claims**

1. A picture projection method, the method being performed by a vehicle simulator, the vehicle simulator comprising an image generator and a projection device, and the method comprising:

    performing scene rendering by using the image generator based on scene data, to obtain a first scene picture, the scene data indicating a second virtual scene falling within a field of view when a first virtual scene is observed from a first virtual viewpoint;

mapping the first scene picture to a to-be-projected picture by using the image generator according to a first mapping relationship between the first virtual viewpoint and an image space, the to-be-projected picture being located in the image space; and

performing projection display by using the projection device based on a pixel value corresponding to each coordinate point in the to-be-projected picture, to obtain a projection picture.

2. The method according to claim 1, wherein the performing scene rendering by using the image generator based on scene data, to obtain a first scene picture comprises:

determining three-dimensional space coordinate points within a line-of-sight range in the first virtual scene along a line-of-sight range of the first virtual viewpoint by using the image generator, the scene data comprising sub-data corresponding to the three-dimensional space coordinate points;

performing the scene rendering by using the image generator based on the sub-data of the three-dimensional space coordinate points, to obtain the first scene picture; and

the mapping the first scene picture to a to-be-projected picture based on a first mapping relationship between the first virtual viewpoint and an image space comprises:

obtaining a pixel value corresponding to each pixel in the first scene picture; and

updating the pixel value corresponding to each pixel in the first scene picture according to the first mapping relationship between the first virtual viewpoint and the image space, to obtain the to-be-projected picture.

3. The method according to claim 1 or 2, wherein the vehicle simulator further comprises a computer device, and the method further comprises:

obtaining a second mapping relationship between the image space and a screen space by using the computer device, the projection picture being located in the screen space;

obtaining a third mapping relationship between the first virtual viewpoint and the screen space by using the computer device; and

obtaining the first mapping relationship between the first virtual viewpoint and the image space by using the computer device through inverse mapping calculation based on the second mapping relationship and the third mapping relationship.

4. The method according to claim 3, wherein the obtaining a second mapping relationship between the image space and a screen space comprises:

performing projection display on at least three first mark points to enable the at least three first mark points to be in a one-to-one mapping with at least three second mark points set on a projection screen, wherein the at least three second mark points are non-collinear points;

obtaining a first coordinate set of the at least three first mark points in the image space after the at least three first mark points are in the one-to-one mapping with the at least three second mark points;

obtaining a second coordinate set of the at least three second mark points in the screen space; and

determining the second mapping relationship between the image space and the screen space based on the first coordinate set, the second coordinate set, a shape of the projection screen, and a projection matrix corresponding to the projection device.

5. The method according to claim 4, wherein the performing projection display on at least three first mark points to enable the at least three first mark points to be in a one-to-one mapping with at least three second mark points set on a projection screen comprises:

performing projection display on the at least three first mark points, to obtain a mark projection picture;

shooting the mark projection picture by using a camera, to obtain a shot picture, the shot picture comprising the at least three first mark points and the at least three second mark points; and

aligning the at least three first mark points with the at least three second mark points based on the shot picture.

6. The method according to any one of claims 3 to 5, wherein the obtaining a third mapping relationship between the first virtual viewpoint and the screen space comprises:

determining a line-of-sight set from the first virtual viewpoint to the second coordinate set based on the second coordinate set of the at least three second mark points in the screen space; and

determining the third mapping relationship between the first virtual viewpoint and the screen space based on the first virtual viewpoint, the line-of-sight set, the second coordinate set, and the shape of the projection screen.

7. The method according to any one of claims 3 to 6, wherein the obtaining the first mapping relationship between the first virtual viewpoint and the image space through inverse mapping calculation based on the second mapping relationship and the third mapping relationship comprises:

determining two mapping relationship expressions corresponding to the second coordinate set based on the second mapping relationship and the third mapping relationship; and

determining the first mapping relationship between the first virtual viewpoint and the image space in an inverse mapping calculation manner based on the two mapping relationship expressions.

8. The method according to any one of claims 1 to 7, wherein the vehicle simulator further comprises a computer device, and when at least two projection devices and at least two image generators are present, the at least two projection devices and the at least two image generators are in a one-to-one mapping, and the method further comprises:

determining a first mapping relationship between the first virtual viewpoint and an image space corresponding to each image generator by using the computer device;

mapping each first scene picture to a to-be-projected picture in each image space based on the first mapping relationship between the first virtual viewpoint and each image space by using the at least two image generators;

performing projection display by using each projection device based on pixel values corresponding to coordinate points of the to-be-projected picture in each image space, to obtain a plurality of projection pictures; and

determining a picture overlapping area by using the computer device based on an overlapping situation of the plurality of projection pictures and a shape of a projection screen corresponding to each projection device, to adjust brightness of the picture overlapping area.

9. The method according to any one of claims 1 to 8, further comprising:

determining an overlapping coordinate point corresponding to each projection device in a respective to-be-projected picture by using the computer device based on a second mapping relationship between a screen space and an image space of each projection device, the overlapping coordinate point being a coordinate point that is overlapped after being mapped to the screen space; and

adjusting a brightness value of the overlapping coordinate point by using the computer device based on screen projection brightness, causing the projection brightness corresponding to the overlapping coordinate point to be the same as the projection brightness corresponding to other non-overlapping coordinate points.

10. The method according to any one of claims 1 to 9, wherein the vehicle simulator further comprises a computer device, and the method further comprises:

displaying a viewpoint selection control on the computer device before picture projection; and

determining that the first virtual viewpoint is selected from the first virtual viewpoint and a second virtual viewpoint by using the computer device in response to a trigger operation on the viewpoint selection control.

11. A picture projection apparatus, configured in a vehicle simulator, and comprising:

a rendering module, configured to perform scene rendering based on scene data, to obtain a first scene picture, the scene data indicating a second virtual scene falling within a field of view when a first virtual scene is observed from a first virtual viewpoint;

a first pixel determining module, configured to map the first scene picture to a to-be-projected picture according to a first mapping relationship between the first virtual viewpoint and an image space, the to-be-projected picture being located in the image space; and

a first picture projection module, configured to perform projection display based on a pixel value corresponding to each coordinate point in the to-be-projected picture, to obtain a projection picture.

12. The apparatus according to claim 11, wherein

the rendering module is further configured to determine three-dimensional space coordinate points within a line-of-sight range in the first virtual scene along a line-of-sight range of the first virtual viewpoint, the scene data comprising sub-data corresponding to the three-dimensional space coordinate points; and perform scene rendering based on the sub-data corresponding to the three-dimensional space coordinate points, to obtain the first scene picture; and

the first pixel determining module is further configured to obtain a pixel value corresponding to each pixel in the first scene picture; and update the pixel value corresponding to each pixel in the first scene picture according to the first mapping relationship between the first virtual viewpoint and the image space, to obtain the to-be-projected picture.

13. The apparatus according to claim 11, further comprising:

a first obtaining module, configured to obtain a second mapping relationship between the image space and a screen space, the projection picture being located in the screen space;
a second obtaining module, configured to obtain a third mapping relationship between the first virtual viewpoint and the screen space; and
a first mapping calculation module, configured to obtain the first mapping relationship between the first virtual viewpoint and the image space through inverse mapping calculation based on the second mapping relationship and the third mapping relationship.

14. The apparatus according to claim 13, wherein the first obtaining module is further configured to:

perform projection display on at least three first mark points to enable the at least three first mark points to be in a one-to-one mapping with at least three second mark points set on a projection screen, wherein the at least three second mark points are non-collinear points;
obtain a first coordinate set of the at least three first mark points in the image space after the at least three first mark points are in the one-to-one mapping with the at least three second mark points;
obtain a second coordinate set of the at least three second mark points in the screen space; and
determine the second mapping relationship between the image space and the screen space based on the first coordinate set, the second coordinate set, a shape of the projection screen, and a projection matrix corresponding to the projection device.

15. The apparatus according to claim 14, wherein the first obtaining module is further configured to:

perform projection display on the at least three first mark points, to obtain a mark projection picture;
shoot the mark projection picture by using a camera, to obtain a shot picture, the shot picture comprising the at least three first mark points and the at least three second mark points; and
align the at least three first mark points with the at least three second mark points based on the shot picture.

16. The apparatus according to any one of claims 13 to 15, wherein the second obtaining module is further configured to:

determine a line-of-sight set from the first virtual viewpoint to the second coordinate set based on the second coordinate set of the at least three second mark points in the screen space; and
determine the third mapping relationship between the first virtual viewpoint and the screen space based on the first virtual viewpoint, the line-of-sight set, the second coordinate set, and the shape of the projection screen.

17. The apparatus according to any one of claims 13 to 16, wherein the second obtaining module is further configured to:

determine two mapping relationship expressions corresponding to the second coordinate set based on the second mapping relationship and the third mapping relationship; and
determine the first mapping relationship between the first virtual viewpoint and the image space in an inverse mapping calculation manner based on the two mapping relationship expressions.

18. A computer device, comprising a processor and a memory, the memory having at least one instruction stored therein, and the at least one instruction being executed by the processor to implement the picture projection method according to any one of claims 1 to 10.

19. A computer-readable storage medium, storing at least one instruction, the at least one instruction being loaded and executed by a processor to implement the picture projection method according to any one of claims 1 to 10.

20. A computer program product, the computer program product comprising computer instructions, the computer instructions being stored in a computer-readable storage medium, and a processor of a computer device reading the computer instructions from the computer-readable storage medium and implementing the computer instructions to implement the picture projection method according to any one of claims 1 to 10.

FIG. 1

FIG. 2

Perform scene rendering by using an image generator based on scene data, to obtain a first scene picture, the scene data indicating a second virtual scene falling within a field of view when a first virtual scene is observed from a first virtual viewpoint — 301

Map the first scene picture to a to-be-projected picture by using the image generator based on a first mapping relationship between the first virtual viewpoint and an image space, the to-be-projected picture being located in the image space — 302

Perform projection display by using a projection device based on a pixel value corresponding to each coordinate point in the to-be-projected picture, to obtain a projection picture — 303

FIG. 3

Determine three-dimensional space coordinate points within a line-of-sight range in a first virtual scene along a line-of-sight range of a first virtual viewpoint by using an image generator, the scene data including sub-data corresponding to the three-dimensional space coordinate points — 401

Perform scene rendering by using the image generator based on the sub-data of the three-dimensional space coordinate points, to obtain a first scene picture — 402

Obtain a pixel value corresponding to each pixel in the first scene picture — 403

Update the pixel value corresponding to each pixel in the first scene picture according to a first mapping relationship between the first virtual viewpoint and an image space, to obtain a to-be-projected picture — 404

Perform projection display by using a projection device based on a pixel value corresponding to each coordinate point in the to-be-projected picture, to obtain a projection picture — 405

FIG. 4

EP 4 672 736 A1

FIG. 5

23

Start — 601

Perform projection display on at least three first mark points by using a projector to enable the at least three first mark points to be in a one-to-one mapping with at least three second mark points set on a projection screen — 602

Determine a second mapping relationship between an image space and a screen space — 603

Determine a third mapping relationship between a first virtual viewpoint and the screen space — 604

Obtain a first mapping relationship between the first virtual viewpoint and the image space through inverse mapping calculation — 605

Save the first mapping relationship between the first virtual viewpoint and the image space — 606

Calibration stage

Run a rendering program — 607

Perform scene rendering by using an image generator, to obtain a first scene picture — 608

Obtain the first mapping relationship between the first virtual viewpoint and the image space — 609

Determine a to-be-projected picture — 610

Perform picture projection by using the projector, to obtain a projection picture — 611

Projection stage

FIG. 6

701

702

703

704

705

FIG. 7

Rendering module — 801

First pixel determining module — 802

First picture projection module — 803

FIG. 8

900

911

Network

906        908

Display

909        Input device

910        Input/output
controller
Basic input/output
system

901        912        905

Central
processing unit

Network
interface unit

System bus

904        902        907

913

Operating system

914

Random access
memory

Mass storage
device

Read-only
memory

Application
program

System memory        915

903

Another program
modules

FIG. 9

## INTERNATIONAL SEARCH REPORT

| International application No. |
| --- |
| **PCT/CN2024/098660** |

**A. CLASSIFICATION OF SUBJECT MATTER**

H04N 9/31(2006.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS: CNTXT; ENTXT; ENTXTC; CNKI: 投影, 视点, 校正, 形状, 位置, 坐标, 虚拟, 调整, 亮度, 映射, 屏幕, 图像, 选择, project, viewpoint, correct, shape, position, coordinate, virtual, adjust, luma, map, screen, image, select

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116723303 A (TENCENT TECHNOLOGY (SHENZHEN) CO., LTD.) 08 September 2023 (2023-09-08) claims 1-13, and description, paragraphs 13-16 and 130-166 | 1-20 |
| X | US 2016346693 A1 (BANDAI NAMCO ENTERTAINMENT INC.) 01 December 2016 (2016-12-01) description, paragraphs [0130]-[0172], and figures 1-8 | 1-2, 10-12, 18-20 |
| X | CN 102014259 A (HANGZHOU HUATAI MEDICAL TECHNOLOGY CO., LTD.) 13 April 2011 (2011-04-13) description, paragraphs [0031]-[0040] | 1-2, 10-12, 18-20 |
| Y | US 2016346693 A1 (BANDAI NAMCO ENTERTAINMENT INC.) 01 December 2016 (2016-12-01) description, paragraphs [0130]-[0172], and figures 1-8 | 8-9 |
| Y | CN 112492284 A (GUANGZHOU LEAFUN CULTURE SCIENCE AND TECHNOLOGY CO., LTD.) 12 March 2021 (2021-03-12) description, paragraphs [0060]-[0080], and figures 1-2 | 8-9 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 August 2024** | **22 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/098660** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113240592 A (CHONGQING LILONG TECHNOLOGY INDUSTRY (GROUP) CO., LTD.) 10 August 2021 (2021-08-10)<br>entire document | 1-20 |
| A | CN 115984122 A (SHENZHEN HADBEST ELECTRONICS CO., LTD.) 18 April 2023 (2023-04-18)<br>entire document | 1-20 |
| A | CN 116400507 A (NANJING RUIWEISHI TECHNOLOGY CO., LTD.) 07 July 2023 (2023-07-07)<br>entire document | 1-20 |
| A | US 2013257857 A1 (NAMCO BANDAI GAMES INC.) 03 October 2013 (2013-10-03)<br>entire document | 1-20 |
| A | US 2020045275 A1 (CORETRONIC CORP.) 06 February 2020 (2020-02-06)<br>entire document | 1-20 |
| A | US 9355431 B1 (NORQUIST SKEETS JONATHAN et al.) 31 May 2016 (2016-05-31)<br>entire document | 1-20 |

Form PCT/ISA/210 (second sheet) (July 2022)

EP 4 672 736 A1

| INTERNATIONAL SEARCH REPORT | | International application No. |
|---|---|---|
| Information on patent family members | | PCT/CN2024/098660 |

| Patent document cited in search report | | | Publication date (day/month/year) | Patent family member(s) | | | Publication date (day/month/year) |
|---|---|---|---|---|---|---|---|
| CN | 116723303 | A | 08 September 2023 | CN | 116723303 | B | 05 December 2023 |
| US | 2016346693 | A1 | 01 December 2016 | US | 10661174 | B2 | 26 May 2020 |
| | | | | JP | 2015154219 | A | 24 August 2015 |
| | | | | JP | 6448196 | B2 | 09 January 2019 |
| | | | | WO | 2015122450 | A1 | 20 August 2015 |
| | | | | CN | 105993167 | A | 05 October 2016 |
| | | | | CN | 105993167 | B | 12 April 2019 |
| CN | 102014259 | A | 13 April 2011 | CN | 102014259 | B | 09 January 2013 |
| CN | 112492284 | A | 12 March 2021 | None | | | |
| CN | 113240592 | A | 10 August 2021 | None | | | |
| CN | 115984122 | A | 18 April 2023 | None | | | |
| CN | 116400507 | A | 07 July 2023 | None | | | |
| US | 2013257857 | A1 | 03 October 2013 | GB | 2502183 | A | 20 November 2013 |
| | | | | JP | 2013211672 | A | 10 October 2013 |
| US | 2020045275 | A1 | 06 February 2020 | TW | 202008774 | A | 16 February 2020 |
| | | | | TWI | 703870 | B | 01 September 2020 |
| | | | | EP | 3606060 | A1 | 05 February 2020 |
| | | | | EP | 3606060 | B1 | 10 January 2024 |
| | | | | US | 11323674 | B2 | 03 May 2022 |
| | | | | CN | 110784691 | A | 11 February 2020 |
| | | | | CN | 110784691 | B | 18 February 2022 |
| US | 9355431 | B1 | 31 May 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311012449